# FASCICULE DE BREVET EUROPEEN

(11) **EP 2 908 935 B1**
(45) Date de publication et mention de la délivrance du brevet: **30.08.2017**
(21) Numéro de dépôt: 13782757.2
(22) Date de dépôt: 24.09.2013
(51) Int. Cl.: B01J 8/00, B01J 8/06

(54) **MÉTHODE UTILISANT UN SYSTÈME PNEUMATIQUE DE CHARGEMENT DENSE DE CATALYSEUR DANS DES TUBES A BAIONNETTE POUR RÉACTEUR ÉCHANGEUR DE VAPOREFORMAGE FAISANT APPEL A UN TUBE AUXILIAIRE POUR L'INTRODUCTION DES PARTICULES SOLIDES**
VERFAHREN MIT EINEM PNEUMATISCHEN SYSTEM FÜR DICHTE KATALYSATORBELADUNG IN BAJONETTRÖHREN FÜR EINEN DAMPFREFORMIERUNGSREAKTOR-TAUSCHER MIT EINER HILFSRÖHRE ZUR EINFÜHRUNG VON FESTSTOFFPARTIKELN
PROCESS USING A PNEUMATIC SYSTEM FOR DENSE CATALYST LOADING IN BAYONET TUBES FOR A STEAM REFORMING REACTOR-EXCHANGER, USING AN AUXILIARY TUBE FOR THE INTRODUCTION OF SOLID PARTICLES

(30) Priorité: 17.10.2012 FR 1202773
(43) Date de publication de la demande: 26.08.2015
(73) Titulaire: IFP Énergies nouvelles, 92852 Rueil-Malmaison Cedex (FR)
(72) Inventeur: SANZ, Elena, F-69005 Lyon (FR); BEAUMONT, Robert, F-69140 Rillieux La Pape (FR); BOYER, Christophe, F-69390 Charly (FR)
(86) Numéro de dépôt international: PCT/FR2013/052244
(87) Numéro de publication internationale: WO 2014/060672

(56) Documents cités:
- EP-A1- 1 374 985
- WO-A1-2005/053833
- FR-A1- 2 950 822

## Description

### DOMAINE DE L'INVENTION

La présente invention se situe dans le domaine du chargement des tubes catalytiques utilisés dans des réacteurs tubulaires mettant en oeuvre des réactions fortement endothermiques ou fortement exothermiques. La présente invention est donc particulièrement adaptée au réacteur de vaporeformage de gaz naturel ou de diverses coupes hydrocarbonées en vue de la production du mélange CO+H₂ appelé gaz de synthèse.

On peut distinguer deux grandes familles de réacteurs de vaporeformage.

Les réacteurs dans lesquels la chaleur est apportée par un ensemble de brûleurs situés à l'intérieur du réacteur, et ceux dans lesquels la chaleur est apportée par un fluide caloporteur, généralement des fumées de combustion, ladite combustion ayant lieu à l'extérieur du réacteur de vaporeformage lui même.

Certains réacteurs de ce dernier type qu'on appelle dans la suite réacteur échangeur, font appel à des tubes simples. D'autres font appel à des tubes concentriques doubles également appelés tubes à baïonnette. Un tube à baïonnette peut se définir comme un tube intérieur entouré d'un tube extérieur coaxial au tube interne, l'espace annulaire compris entre le tube intérieur et le tube extérieur étant généralement rempli de catalyseur. Dans la suite du texte on parlera d'espace annulaire ou de zone catalytique pour désigner ledit espace annulaire défini par les tubes à baïonnette.

Dans le cadre de la présente invention, le gaz naturel, ou plus généralement la charge hydrocarbonée, est introduit(e) par la zone annulaire selon un écoulement de haut en bas, et les effluents réactionnels sont collectés dans la partie centrale du tube interne selon un écoulement de bas en haut.

La réaction de vaporeformage du gaz naturel pour la production d'hydrogène, est très endothermique et a donc généralement lieu dans des fours ou des réacteurs-échangeurs au sens précédemment défini.

La réaction a lieu a des températures très élevées, typiquement 900°C et sous pression, typiquement de 20 à 30 bars. Dans ces conditions, seule une mise en oeuvre de la réaction à l'intérieur de tubes peut être envisagée dans des conditions économiquement viables en raison de la tenue mécanique des matériaux.

Les réacteurs échangeurs catalytiques sont donc constitués d'une multitude de tubes, typiquement de l'ordre de 200 à 350 tubes pour des unités produisant 100 000 Nm³/h d'hydrogène, cet ensemble de tubes étant enfermé dans une calandre qui reçoit le fluide chaud permettant d'apporter les calories nécessaires à la réaction de vaporeformage.

Ce fluide chaud ou fluide caloporteur est généralement constitué par les fumées d'une combustion ayant lieu à l'extérieur du réacteur échangeur.

Le catalyseur doit donc être installé dans tous les tubes de vaporeformage de façon régulière d'un tube à l'autre, afin d'avoir une perte de charge identique d'un tube à l'autre.

Cette condition est très importante pour garantir une bonne répartition des réactifs sur l'ensemble des tubes catalytiques et éviter qu'un tube soit par exemple moins alimenté, ce qui pourrait conduire à une surchauffe importante du matériau constituant le tube, cette surchauffe réduisant d'autant la durée de vie du tube.

De même, il est important qu'aucun espace vide, c'est à dire sans catalyseur ou appauvri en catalyseur, ne subsiste dans un tube, car à nouveau le tube pourrait surchauffer localement, faute de réaction catalytique à l'intérieur. De plus, toute hétérogénéité dans la répartition du catalyseur dans la zone réactionnelle peut se traduire par un écoulement déséquilibré du ou des fluides réactionnels.

Le dispositif selon la présente invention vise donc un chargement à la fois dense et homogène entre chacun des tubes à baïonnette faisant partie du réacteur échangeur.

### EXAMEN DE L'ART ANTERIEUR

Nous nous limiterons dans cet examen au dispositif de chargement de type pneumatique.

Le brevet FR 2950822 de la demanderesse décrit une solution pour le chargement des tubes à baïonnette avec 3 tubes de chargement, avec freins mécaniques ou freinage pneumatique. Cette méthode de chargement permet un chargement dense et uniforme des tubes baïonnette. S'agissant d'une méthode "grain par grain", elle s'avère trop lente et peu adaptée pour une mise en oeuvre à l'échelle d'un réacteur industriel comportant plusieurs centaines de tubes.

Le brevet EP1374985 décrit un système de chargement avec tube amovible pour l'introduction d'un écoulement air à contre courant qui freine la chute des particules. Ce système s'applique à des tubes classiques de vaporeformage de gaz naturel, mais il ne tient pas compte des spécificités des tubes à baïonnette.

Aucun des documents trouvés ne concerne une application aux tubes à baïonnette avec chargement d'une zone annulaire.

Le dispositif objet de la présente invention peut donc se définir comme un dispositif pneumatique de chargement dense de catalyseur dans la zone annulaire des tubes à baïonnette équipant un réacteur échangeur de vaporeformage, le dispositif permettant un chargement homogène en densité dans chacun des tubes du réacteur échangeur en respectant une contrainte de temps compatible avec les impératifs d'un démarrage industriel.

De plus, dans un certain nombre de cas, le dispositif selon l'invention doit pouvoir s'adapter à des variations de diamètre intérieur du tube externe (6), imposées par les contraintes mécaniques et thermiques qui évoluent le long du tube, donc à un changement de dimensions de la zone annulaire. Aucun dispositif de l'art antérieur ne prend en compte cette contrainte supplémentaire.

### DESCRIPTION SOMMAIRE DES FIGURES

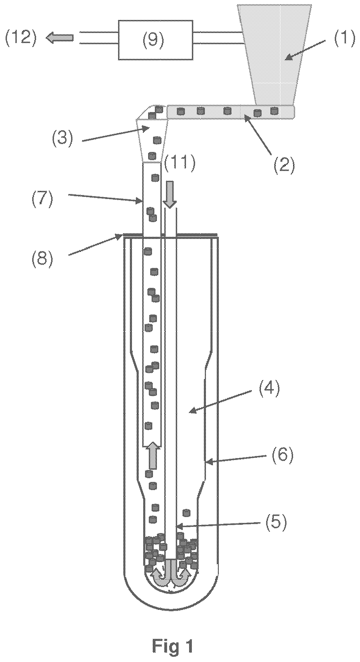

La figure 1 représente le dispositif utilisé dans la méthode selon l'invention dans lequel on a fait apparaitre le tube auxiliaire rigide (7) par tronçons permettant d'introduire les particules solides dans la zone annulaire (4), ainsi que le système d'enroulement de ce dernier.

### DESCRIPTION SOMMAIRE DE L'INVENTION

La présente invention peut se définir comme une méthode utilisant un dispositif pneumatique de remplissage dense du catalyseur dans un réacteur échangeur de vaporeformage consistant en une pluralité de tubes à baïonnette enfermés dans une calandre, chaque tube à baïonnette comportant une zone annulaire au moins partiellement remplie de catalyseur. Ledit catalyseur est constitué de particules solides occupant au moins en partie l'espace annulaire (4) compris entre un tube interne (5) et un tube externe (6), l'ensemble de ces deux tubes constituant le tube à baïonnette, la largeur dudit espace annulaire étant comprise entre 30 mm et 80 mm, et sa hauteur étant comprise entre 10 et 20 mètres.

Les particules de catalyseur ont généralement la forme de cylindres de hauteur approximativement 10 mm à 20 mm, et de diamètre approximativement 5 mm à 20 mm.

Le dispositif selon la présente invention consiste dans sa version de base en :
- un tube auxiliaire rigide (7) divisé en plusieurs tronçons, pénétrant à l'intérieur de la zone annulaire (4) et maintenu à une distance de la surface du lit en formation comprise entre 50 mm et 150 mm, ledit tube amenant les particules solides dans la zone annulaire (4) à contre-courant d'un débit de gaz de ralentissement étant introduit par le tube interne (5),
- ledit tube auxiliaire rigide (7) étant démontable en tronçons de longueur comprise entre 50 cm et 200 cm, et les particules de catalyseur étant contenues dans
- une trémie centrale (1) permettant de délivrer les particules sur un tapis roulant ou un couloir vibrant (2) alimentant le tube auxiliaire (7), par l'intermédiaire
- d'un entonnoir (3), par lequel s'écoulent les particules à l'intérieur du tube auxiliaire (7).

En fonction des débits de particules solides à charger, on peut utiliser deux ou trois tubes rigides (7) identiques et fonctionnant en parallèle. Dans la suite du texte lorsqu'on parle du tube auxiliaire rigide (7), il faut donc entendre du ou des tubes auxiliaires rigides (7).

Ce groupe de tubes rigides (7) travaillant en parallèle peut être alimenté par une trémie unique.

La présente invention consiste ainsi en une méthode de chargement du catalyseur faisant appel au dispositif précédemment décrit, méthode qui peut se décrire par la suite d'étapes suivantes :
- le tube auxiliaire rigide (7) est initialement démonté en tronçons se trouve à l'extérieur du tube à baïonnette, la trémie (1) étant remplie de solide,
- le tube auxiliaire rigide (7) est introduit progressivement dans la zone annulaire (4) par sa partie supérieure en ajoutant des tronçons jusqu'à ce que son extrémité inférieure se situe à une distance comprise entre 50 cm et 100 cm par rapport au fond du tube.
- un débit de gaz constant est introduit par le tube central (5), passe dans l'espace annulaire et remonte à l'intérieur du tube auxiliaire, le débit de gaz étant tel qu'il génère une vitesse à l'intérieur du tube auxiliaire comprise entre 8 m/s et 14 m/s,
- le tapis roulant ou le couloir vibrant (2) est mis en route de manière à fournir un débit de solide compris entre 150 kg/h et 500 kg/h, et préférentiellement entre 250 kg/h et 500 kg/h, débit solide qui est introduit dans le tube auxiliaire (4) par l'intermédiaire de l'entonnoir (3),
- les grains de solide sont ralentis à l'intérieur du tube auxiliaire et tombent sur la surface du lit en formation qui remplit la zone annulaire (4),
- au fur et à mesure que la zone annulaire (4) se remplit, le tube auxiliaire rigide (7) est remonté de la zone annulaire (4) par enlèvement de tronçons, de manière à respecter une distance constante par rapport à la surface du lit qui se constitue progressivement, ladite distance étant toujours comprise entre 50 cm et 150 cm,
- le tube auxiliaire rigide (7) est retiré avec une vitesse équivalente à la vitesse de chargement du tube comprise entre 0,1 m/min et 0,4 m/min et préférentiellement comprise entre 0,2 mètre/min et 0,4 mètre/min.
- une fois le tube baïonnette chargé et le système de chargement retiré, le système de chargement est déplacé pour le chargement du tube suivant.

Lorsqu'on utilise un groupe de tubes rigides (7), fonctionnant en parallèle, c'est le groupe de tubes (7) qui est déplacé de manière à alimenter un autre groupe de tubes à baïonnette. Généralement le gaz utilisé pour la mise en oeuvre de la méthode selon l'invention, est de l'air ou de l'azote.

### DESCRIPTION DETAILLÉE DE L'INVENTION

La présente invention peut se définir comme une méthode pour le chargement dense de catalyseur dans l'espace annulaire (4) de tubes à baïonnette, chaque tube ayant une hauteur comprise entre 10 m et 20 m, un diamètre du tube externe (6) compris entre 250 mm et 150 mm, et un diamètre externe du tube interne (5) compris entre 10 et 40 mm.

L'espace annulaire (4) contenant le catalyseur a donc une largeur caractéristique d'environ 50 mm. Dans la pratique, selon les cas, la largeur caractéristique de l'espace annulaire (4) pourra varier entre 80 mm et 30 mm.

De plus, dans certains cas, le tube externe (6) a un diamètre décroissant de haut en bas par tronçons, ce qui signifie que la largeur caractéristique de l'espace annulaire (4) diminue également en allant de haut en bas.

Le dispositif selon l'invention permet une adaptation très facile à ces variations de largeur caractéristique tout en conservant ses performances sur l'ensemble des tronçons.

Les grains de catalyseur ont généralement la forme de cylindres d'environ 10 mm à 20 mm de hauteur et 5 mm à 20 mm de diamètre.

Un des problèmes majeurs posés par leur chargement dans des tubes de plus de 10 mètres de longueur est le risque de casse de ces grains si on les faisait simplement tomber en chute libre sans aucune précaution, ce qui est une des solutions de l'art antérieur pour réaliser un chargement dense. On admet généralement que le risque de casse des grains est important à partir d'une hauteur de chute de 1 mètre.

D'autres problèmes sont liés à la géométrie même de l'espace catalytique annulaire, qui interdit le passage des systèmes de chargement classiques.

Dans un cas fréquent dans le contexte de la présente invention, il faut tenir compte du tube interne (5) qui traverse le tube externe (6) dans la partie supérieure de la zone annulaire (4) pour permettre une sortie totalement dégagée des effluents réactionnels.

Enfin, comme indiqué dans l'art antérieur, le risque de formation de voûte est accentué lorsque le ratio entre le diamètre du tube et la dimension principale des particules est inférieur à 8, ce qui est souvent le cas dans le contexte de la présente invention, puisque la largeur typique de l'espace annulaire (50 mm) équivaut à environ 4 fois le diamètre caractéristique des particules de catalyseur.

Une contrainte importante que doit également respecter le dispositif de chargement, est que le chargement se faisant tube par tube, il doit être suffisamment rapide pour une mise en oeuvre industrielle, car un réacteur de vaporeformage visant une production d'environ 100 000 Nm³/h d'H₂ compte environ de 200 à 350 tubes baïonnette.

La présente invention décrit un système de chargement d'un tube à baïonnette au moyen d'un écoulement de gaz, généralement de l'air, à contre-courant de la chute des particules, qui ralentit donc la chute desdites particules en évitant ainsi leur cassure, et permet un chargement homogène et sans blocage.

La vitesse terminale de chute des grains considérés est d'environ 14 m/s. Pour éviter la rupture des grains, les particules doivent tomber avec une vitesse inférieure à 3 m/s et préférentiellement inférieure à 2 m/s.

La vitesse du gaz à contre-courant de la chute des particules doit être comprise entre 11 m/s et 13 m/s pour obtenir une chute ralentie des particules. L'obtention d'une telle vitesse dans tout l'espace annulaire (4) nécessiterait un débit de gaz très important. L'introduction d'un tel débit par le tube interne (5) de diamètre typiquement compris entre 30 mm et 50 mm peut générer de trop fortes vitesses à l'intérieur de ce tube, pouvant même aller jusqu'un écoulement sonique.

Dans la présente invention, le débit de gaz nécessaire au ralentissement convenable des particules est intégralement introduit par le tube interne (5), mais les particules solides sont amenées dans la zone annulaire (4) par l'intermédiaire d'un tube auxiliaire rigide (7), dont le diamètre varie entre 0,5 et 0,9 fois la largeur de l'espace annulaire (4) et plus précisément du plus petit des espaces annulaires (4) dans le cas d'un tube avec changement de diamètre interne du tube externe (6). Ce tube auxiliaire rigide (7) est divisé en plusieurs tronçons de manière à permettre sa descente au fond de la zone annulaire (4) en début de chargement puis son retrait progressif au fur et à mesure du chargement de ladite zone annulaire (4). L'écoulement de gaz à l'intérieur du tube interne (5) est tel que
- d'une part il génère une vitesse dans le tube auxiliaire rigide (7) qui est comprise entre 8 m/s et 14 m/s, et préférentiellement entre 11 m/s et 13 m/s.
- d'autre part il génère dans la zone annulaire (4) une vitesse ascendante inférieure à la vitesse minimale de fluidisation des particules solides, comprise entre 3 m/s et 4 m/s, afin de maintenir le lit de particules en formation à l'état de lit fixe, mais d'emporter les particules fines qui ont pu être générées pendant le chargement.

Le chargement se fait en vrac par l'ouverture supérieure du ou des tubes auxiliaires (7), au moyen d'une trémie de chargement (1) et d'un couloir vibrant ou tapis roulant (2).

Entre le couloir vibrant (2) et le tube auxiliaire rigide (7) un accouplement souple (3) est utilisé pour canaliser les particules de catalyseur tout en empêchant la transmission des vibrations au tube auxiliaire rigide.

L'écoulement de gaz en sortie du tube auxiliaire rigide (7), chargé en fines particules, passe à travers un filtre (9) qui permet la rétention des poussières et l'expulsion d'un gaz propre (12). Un système d'étanchéité (8) assure le passage du gaz à travers uniquement le système de chargement de solide et de filtration (9).

Les variations de section de la zone annulaire (4) n'ont plus d'influence sur le débit d'air à introduire par le tube interne (5) qui reste constant tout au long du chargement, ce qui rend le présent dispositif particulièrement bien adapté aux géométries de tubes avec variation de dimension de la zone annulaire (4).

### EXEMPLE SELON L'INVENTION

Des essais de chargement ont été réalisés avec le dispositif pneumatique utilisé dans la méthode selon l'invention dans une colonne expérimentale de 1 m de hauteur, constituée d'un tube interne (5) de diamètre externe 42 mm et diamètre interne 32,2 mm, et d'un tube externe (6) de diamètre interne 128,1 mm.

Les particules de solide à charger ont la forme de petits cylindres de hauteur 1,5 cm et de diamètre 0,8 cm.

Le tube de chargement auxiliaire (7) a une longueur totale de 6,2 m et un diamètre de 5 cm. La distance entre l'extrémité inférieure du tube auxiliaire rigide (7) et la surface du lit en formation est maintenue égale à 50 cm pendant le chargement.

Un débit d'air de 76,3 m³/h est introduit par le tube interne de la baïonnette, ce qui génère une vitesse de chargement à l'intérieur du tube auxiliaire rigide (7) de 10,8 m/s.

La vitesse à l'intérieur du tube interne (5) de la baïonnette est de 26 m/s.

La vitesse ascendante à travers le lit de particules solides est de 2 m/s, donc inférieure à la vitesse minimale de fluidisation.

Le dispositif pneumatique est relevé en continu à une vitesse de 0,2 m/min.

Une fois le lit chargé, la mesure de ΔP est faite avec un débit d'air de 130 Nm³/h.

Après déchargement, les particules cassées sont isolées du lot. Le taux de casse est très faible, de l'ordre de 0,7%.

Les résultats du chargement sont montrés dans le tableau 1 ci-dessous.

Le chargement obtenu avec ce système est très satisfaisant, avec une très bonne reproductibilité en termes de perte de charge (écarts à la moyenne d'environ ± 3%).

Le temps de chargement est d'entre 5 et 6 minutes/mètre, ce qui correspond à un temps de remplissage d'environ 66 minutes pour un tube de 12 m (pour un débit de solide d'environ 180 kg/h).

La densité de chargement est d'environ 970 kg/m³, assez reproductible dans tous les chargements.

**Tableau 1 : résultats des chargements avec système pneumatique avec tube auxiliaire de chargement sur une maquette de 1 m.**

| **Temps de chargement (min)** | **Hauteur de solide (cm)** | **Densité de chargement (kg/m³)** | **Perte de charge (mm H₂O)** | **Écart à la moyenne** | **Taux de brisure** |
|---|---|---|---|---|---|
| 5'00" | 98 | 968 | 260 | 0,5% | 0,76% |
| 5'42" | 97 | 978 | 266 | 2,8% | 0,78% |
| 6' | 98 | 968 | 250 | -3,3% | 0,69% |
| Moyenne de perte de charge | | | 258,6 | | |

## Revendications

1. Méthode de chargement de particules de catalyseur dans un réacteur échangeur de vaporeformage consistant en une pluralité de tubes à baïonnette enfermés dans une calandre, le catalyseur étant constitué de particules occupant au moins en partie l'espace annulaire (4) compris entre un tube interne (5) et un tube externe (6), l'ensemble de ces deux tubes constituant un tube à baïonnette, la largeur dudit espace annulaire étant comprise entre 30 mm et 80 mm, et sa hauteur comprise entre 10 et 20 mètres, les dites particules de catalyseur ayant la forme de cylindres de hauteur approximativement 10 mm à 20 mm, et de diamètre approximativement 5 mm à 20 mm,
ladite méthode de chargement utilisant un dispositif de remplissage dense du catalyseur consistant en :
- au moins un tube auxiliaire rigide (7) pénétrant à l'intérieur de la zone annulaire (4) et maintenu à une distance de la surface du lit en formation comprise entre 50 et 150 mm, de diamètre variant entre 0,5 et 0,9 fois la largeur de l'espace annulaire (4), ledit tube auxiliaire rigide (7) permettant d'introduire les particules solides à charger dans la zone annulaire (4), et étant traversé à contre-courant par un débit de gaz introduit par le tube interne (5),
- ledit tube auxiliaire (7) étant divisé en plusieurs tronçons de longueur comprise entre 50 cm et 200 cm, qui sont mis bout à bout au début du chargement, puis progressivement retirés au fur et à mesure de la formation du lit de particules de manière à maintenir la distance voulue par rapport à la surface du lit, et les particules de catalyseur étant contenues dans:
- une trémie centrale (1) permettant de délivrer les particules sur un couloir vibrant ou un tapis roulant (2) alimentant le tube auxiliaire rigide (7), par l'intermédiaire:
- d'un entonnoir (3), par lequel s'écoulent les particules à l'intérieur de l'espace annulaire (4),
et ladite méthode de chargement dense étant **caractérisée par** la suite d'étapes suivantes:
- le tube auxiliaire rigide (7) est initialement démonté en tronçons et se trouve à l'extérieur du tube à baïonnette, la trémie (1) étant remplie de solide,
- le tube auxiliaire rigide (7) est introduit progressivement dans la zone annulaire (4) en mettant bout à bout le nombre de tronçons nécessaires jusqu'à ce que son extrémité inférieure se situe à une distance comprise entre 50 cm et 100 cm par rapport au fond de la zone annulaire (4).
- le débit de gaz adéquat est intégralement introduit par le tube interne (5),
- le tapis roulant ou le couloir vibrant (2) est mis en route de manière à fournir un débit de particules solides compris entre 150 kg/h et 500 kg/h, et préférentiellement compris entre 250 kg/h et 500 kg/h, lesdites particules solides étant introduites dans la zone annulaire (4) par l'intermédiaire du tube auxiliaire rigide (7),
- au fur et à mesure que la zone annulaire (4) se remplit, le tube auxiliaire rigide (7) est remonté de la zone annulaire (4) par enlèvement de tronçons à l'aide de l'enrouleur externe (10), de manière à respecter une distance constante par rapport à la surface du lit qui se constitue progressivement, ladite distance étant toujours comprise entre 50 cm et 100 cm,
- le tube auxiliaire rigide (7) est retiré avec une vitesse équivalente à la vitesse de chargement du tube comprise entre 0,1 m/min et 0,4 m/min, et préférentiellement comprise entre 0,2 et 0,4 m/min.
- une fois le tube baïonnette chargé et le système de chargement retiré, le tube auxiliaire rigide (7) est déplacé pour le chargement du tube suivant.

2. Méthode de chargement du catalyseur selon la revendication 1, dans laquelle le gaz utilisé est de l'air ou de l'azote.

## Patentansprüche

1. Verfahren zur Beschickung eines Dampfreformierungsreaktor mit Katalysatorteilchen, der aus mehreren Bajonettrohren besteht, die in einem Kalander eingeschlossen sind, wobei der Katalysator aus Teilchen gebildet ist, die mindestens teilweise den Ringraum (4) zwischen einem Innenrohr (5) und einem Außenrohr (6) einnehmen, wobei die Anordnung dieser zwei Rohre ein Bajonettrohr bildet, wobei die Breite des Ringraums zwischen 30 mm und 80 mm beträgt und seine Höhe zwischen 10 und 20 Metern beträgt, wobei die Katalysatorteilchen die Form von Zylindern mit einer Höhe von etwa 10 mm bis 20 mm und einem Durchmesser von etwa 5 mm bis 20 mm aufweisen, wobei das Verfahren zur Beschickung eine Vorrichtung zur dichten Befüllung des Katalysators verwendet, bestehend aus:
- mindestens einem starren Hilfsrohr (7), das in das Innere des Ringbereichs (4) eindringt und in einem Abstand von der Oberfläche des sich bildenden Bettes gehalten wird, der zwischen 50 und 150 mm beträgt, mit einem Durchmesser, der zwischen dem 0,5- und 0,9-fachen der Breite des Ringraums (4) variiert, wobei das starre Hilfsrohr (7) ermöglicht, die zu beschickenden Feststoffteilchen in den Ringraum (4) einzuführen und im Gegenstrom von einem Gasstrom durchströmt wird, der von dem Innenrohr (5) eingeführt wird,
- wobei das Hilfsrohr (7) in mehrere Teilabschnitte von einer Länge, die zwischen 50 cm und 200 cm beträgt, unterteilt ist, die zu Beginn des Beschickens aneinandergefügt und dann nach und nach im Zuge der Bildung des Teilchenbetts derart entfernt werden, um den gewünschten Abstand gegenüber der Oberfläche des Bettes aufrecht zu erhalten, und wobei die Katalysatorteilchen in:
- einem zentraler Trichter (1) enthalten sind, der ermöglicht, die Teilchen auf eine Schüttelrinne oder ein Förderband (2) abzugeben, die oder das das starre Hilfsrohr (7) durch:
- einen Trichter (3) speist, durch den die Partikel in das Innere des Ringraums (4) strömen,
und wobei das Verfahren zur dichten Beschickung durch die Abfolge von folgenden Schritten gekennzeichnet ist:
- das starre Hilfsrohr (7) wird anfänglich in Teilabschnitte zerlegt und befindet sich außerhalb des Bajonettrohrs, wobei der Trichter (1) mit Feststoff gefüllt ist,
- das starre Hilfsrohr (7) wird schrittweise in den Ringbereich (4) eingeführt, indem die Anzahl an Teilabschnitten aneinandergefügt werden, die notwendig sind, bis sich sein unteres Ende in einem Abstand, der zwischen 50 cm und 100 cm beträgt, gegenüber dem Boden des Ringbereichs (4) befindet,
- der angemessene Gasstrom wird vollständig von dem Innenrohr (5) eingeführt,
- das Förderband oder die Schüttelrinne (2) wird derart in Gang gesetzt, um einen Durchsatz von Feststoffteilchen zwischen 150 kg/h und 500 kg/h und vorzugsweise zwischen 250 kg/h und 500 kg/h bereitzustellen, wobei die Feststoffteilchen durch das starre Hilfsrohr (7) in den Ringbereich (4) eingeführt werden,
- in dem Maße, in dem sich der Ringbereich (4) füllt, wird das starre Hilfsrohr (7) von dem Ringbereich (4) durch Entfernen von Teilabschnitten mittels des externen Aufwicklers (10) derart wieder abmontiert, um einen konstanten Abstand gegenüber der Oberfläche des Bettes zu halten, das schrittweise gebildet wird, wobei der Abstand immer zwischen 50 cm und 100 cm beträgt,
- das starre Hilfsrohr (7) wird mit einer Geschwindigkeit entfernt, die der Beschickungsgeschwindigkeit des Rohrs entspricht, die zwischen 0,1 m/min und 0,4 m/min beträgt, und vorzugsweise zwischen 0,2 und 0,4 m/min beträgt,
- nachdem das Bajonettrohr beschickt und das System zur Beschickung entfernt worden ist, wird das starre Hilfsrohr (7) für das Beschicken des folgenden Rohrs verschoben.

2. Verfahren zur Beschickung des Katalysators nach Anspruch 1, wobei das verwendete Gas Luft oder Stickstoff ist.

## Claims

1. A method for loading particles of catalyst into a steam reforming exchanger-reactor consisting of a plurality of bayonet tubes enclosed in a shell, the catalyst being constituted by particles occupying at least a portion of the annular space (4) included between an internal tube (5) and an external tube (6), the assembly of these two tubes constituting a bayonet tube, the width of said annular space being in the range 30 mm to 80 mm, and its height being in the range 10 to 20 metres, said particles of catalyst being in the form of cylinders with an approximate height of 10 mm to 20 mm and with an approximate diameter of 5 mm to 20 mm, said loading method using a device for densely filling catalyst consisting of:
• at least one rigid auxiliary tube (7) penetrating into the interior of the annular zone (4) and maintained at a distance from the surface of the bed being formed which is in the range 50 mm to 150 mm, with a diameter in the range 0.5 to 0.9 times the width of the annular space (4), said rigid auxiliary tube (7) allowing the introduction of the solid particles for loading into the annular zone (4) and being traversed by a countercurrent flow of gas introduced via the internal tube (5),
• said auxiliary tube (7) being divided into a plurality of sections with a length in the range 50 cm to 200 cm, which are placed end to end at the start of loading, then gradually withdrawn as and when the bed of particles is formed so as to maintain the desired distance with respect to the surface of the bed, and the particles of catalyst being contained in:
• a central feed hopper (1) for delivering the particles to a shaker conveyor or a conveyor belt (2) supplying the auxiliary tube (7) via:
• a funnel (3), via which the particles flow into the interior of the annular space (4),
and said dense loading method being **characterized by** the following series of steps:
• the rigid auxiliary tube (7) is initially dismantled into sections and is outside the bayonet tube, the feed hopper (1) being filled with solid,
• the rigid auxiliary tube (7) is gradually introduced into the annular zone (4) by placing the necessary number of sections end to end so that its lower end is positioned at a distance in the range 50 cm to 100 cm with respect to the bottom of the annular zone (4),
• a flow of the gas that is suitable is introduced in its entirety into the internal tube (5),
• the conveyor belt or the shaker conveyor (2) is started up so as to provide a flow of solid particles in the range 150 kg/h to 500 kg/h, preferably in the range 250 kg/h to 500 kg/h, said solid particles being introduced into the annular zone (4) via the rigid auxiliary tube (7),
• as the annular zone (4) is being filled, the rigid auxiliary tube (7) is raised from the annular zone (4) by removing sections with the aid of the external winding system (10) so as to keep constant the distance with respect to the surface of the bed which is gradually being formed, said distance always being in the range 50 cm to 100 cm,
• the rigid auxiliary tube (7) is withdrawn at a speed equivalent to the speed of loading of the tube in the range 0.1 m/min to 0.4 m/min, and preferably in the range 0.2 to 0.4 m/min,
• once the bayonet tube has been loaded and the loading system has been withdrawn, the rigid auxiliary tube (7) is displaced in order to load the next tube.

2. The catalyst loading method according to claim 1, in which the gas used is air or nitrogen.
